# EUROPEAN PATENT APPLICATION

(11) **EP 4 331 349 A1**
(43) Date of publication of application: **06.03.2024**
(21) Application number: 22193404.5
(22) Date of filing: 01.09.2022
(51) Int. Cl.: A01G 13/02, A01G 13/10

(54) **PROTECTIVE DEVICE FOR A PLANT AND METHOD FOR APPLICATION OF AN ACTIVE SUBSTANCE TO A PLANT**

(71) Applicant: Falcone Filho, Armando, 19700-000 Sao Paulo (BR)
(72) Inventor: Falcone Filho, Armando, 19700-000 Sao Paulo (BR)
(74) Representative: Scholz, Volker

(57) **Abstract**

The present disclosure relates to a protective device (1) for plants, comprising a plate (2) which is provided with a slit (2) extending from a rim of the plate to a hole (3) into which a stem (4) of the plant is fittable, wherein the plate is provided with at least one sachet (5) of a material permeable for an active substance included in the sachet, and a method for application of active substances to plants.

## Description

### TECHNICAL FIELD

The present invention relates to a protective device for a plant and a method for application of an active substance to a plant, wherein the protective device comprises at least one sachet containing an active substance (input) on the interface between the soil and the protective device with input carrier duly positioned at the foot of the plant releasing same in a slow, gradual and controlled manner in the post-planting, that optionally together with the application of an ant or terminiced gel cone in the end hole of the plant inlet slot avoids the action of leaf-cutting ants and ground termites.

### FIELD OF APPLICATION

The field of application of the invention now claimed is the agroindustry, more specifically that of fertilizers and pest control in forests and orchards.

### STATE OF THE ART

The cultivation of agricultural crops, whether by means of seedlings or seeds, requires a series of steps to obtain success, which range from the opening of furrows, pits, application of fertilizers, watering and combating leaf-eating ants and pests in general.

The opening of linear rows occurs in the case of planting of seedlings while the holes or pits in the case of transplanting seedlings. The linear rows can be manually or mechanically opened by means of planting units. These rows receive subsequent operations of fertilizaton and of other agricltural inputs.

In the same manner, in the case of plants or seedlings there can be used manual or mechanical means for the opening of pits and addingthe pesticides, fertilizers, or other necessary inputs to improve the performance or even survival of the plants.

Still in the initial phase of the plant, several authors emphasize that the leaf-cutting ants, also known as sauba ants, cause serious damages to agropastoral/forestry activities, as well as to the fruit cultures and many other food crops having or not having agricultural importance. There are studies indicating that the investments for the combating thereof can reach 30% of the cost of planting forests up to the 3rd year, and if they are not fought from the beginning of the formation of plants having fruit trees as native or exotic forests can reach up to 50% of reduction in the production thereof, and at times can lead to the premature death of the plants.

Consequently, what is verified is that both the application of fertilizers as the combating of the leaf-cutting ants use wide coverage techniques, which causes colateral damages to the environment, excessive costs, and loss of the efficienty of the products throughout time.

The current state of the art discloses an insecticide formulation, a process for combating the sauba ant and termites and a process of application which associates insecticide with a formulation with components obtained from natural products.

Although it uses natural components, a very wide scope of action not attacking the problem specifically which means waste and more costs is provided.

Also known is a biodegradable device in adsorbent material to be used in the ground in between the seedlings, covering the root zone, being formed by a quadratic basis and lid having the same shape, standing out for having juxtaposed radial channels of predetermined radius in two superimposed layers being a concave channel at the base and/or lid channel, which together allow storage of defensives, fertilizers even the product already added, according to the culture wherein the device will be applied.

Despite reducing and/or controlling the distribution of inputs, the above-cited solution still causes a certain waste since the fertilizar remains on the interface of the devices so a heavier rain can carry the product more rapidly to the ground.

### OBJECTIVES OF THE INVENTION

It is an object of the present invention to provide a protective device with improved, controlled, gradule and safe distribution of active substances avoding the attack of leaf-cutting ants on the stem of the plant.

It is a purpose of the present invention to propose a synergism between the factors erradication of weeds surrounding the seedlings, conservation of the ideal moisture (water), ideal temperature, ideal fertilization, and prevention of attack of the leaf-cutting ants.

It is a purpose of the present invention to propose a product of simple construction with competitive costs and respecting the sustainability rules. The components thereof shall be natural, quickly degraded in the ground and for this used as organic matter.

### SUMMARY OF THE INVENTION

The present invention provides a protective device for a plant, comprising a plate which is provided with a slit extending from a rim of the plate to a hole into which a stem of the plant is fittable, wherein the plate is provided with at least one sachet of a material permeable for an active substance included in the sachet.

The plate may have a triangular, square, rectangular, oval, or circular shape.

A material of the plate may be selected from the group consisting of cardboard, paper and biodegradable plastic.

The hole may be located substantially in the center of the plate.

The active substance may be at least one selected from the group consisting of a fertilizer, a herbicide or any other substance that is beneficial to the plant.

The active substance may be embedded within a substrate.

The material of the sachet may comprise microholes, mesh material or nonwoven.

The plant may be a seedling.

A fluid agent which is in a gel, paste or cream state may be placed around the hole of the plate and/or the stem of the plant.

Also provided is a method for application of an active substance to a plant utilizing the protective device according to the invention.

The active substance and/or fluid agent may be an insecticide for control of ants of the Atta and Acromyrmex species, Termititae and Rhinotermitadae.

The dimensions of the protective device are not limited, but adequate dimensions for each culture, i.e. each plant or seedling, may be readily chosen as appropriate. Also the at least one satchet is not limited in any way with regard to dimension and shape, but may be appropriately adjusted for each culture to be treated and protected.

The action of the sachet is possible since it may be made of micro-perforated substrate, mesh, or in interwoven and spaced microfibers. The interior thereof contains the active substance, such as fertilizer agent or herbicide, or any substance considered necessary or beneficial to the plant, whereby it may be granulated, crumbly, pasty or any physical state. In contact with water the active substance is solubilized passing through the substrate reaching the ground and the solution which will therefrom be absorbed by the plant or externally combating insects, fungi or other parasitary agents. Thus, with the sachets, the releases are slow, gradual and in accordance with the needs of the vegetables in cultivation. As regards the fertilizers being confined and not released on the ground, the slow liberation allows a reduction of up to 40% in the usual dosages, economizing product, protecting the environment, and mainly by reducing the demand for these "noble" products which are mostly imported. Additionally, the plants, as already cited, have an increase in their development and the quality of their fruits or products.

Since it is preferably pasty, the fluid agent, if present, does not allow access by the ants to the aerial part of the plants preventing in this manner that the leaves be cut and carried by the insects. Moreover, the trophallaxis is an efficient means of contamination of the ant colony. The fluid form, different from the solid one, enhances the transmission of the insecticide agent, so that small dosages or even molecules of the active ingredient suffice to obtain a devastating effect on the colony.

### ADVANTAGES OF THE INVENTION

In summary, the present invention presents as main advantages:
✔ Sustainable and environmentally friendly solution;
✔ Excellent cost x benefit relation;
✔ Simple manufacture and handling.

### DESCRIPTION OF THE FIGURES

The present invention is illustrated on the basis of the attached Figures which shall illustrate and better describe the invention, but shall not be considered to be limiting in any manner:

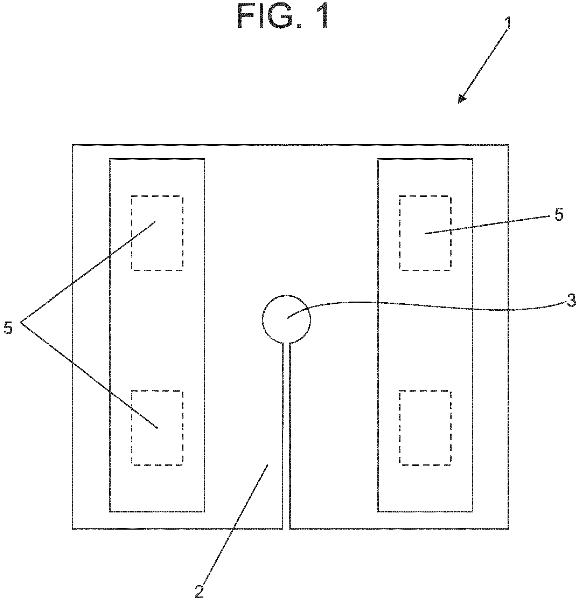

Fig. 1: Top view of the protective device with sachets.

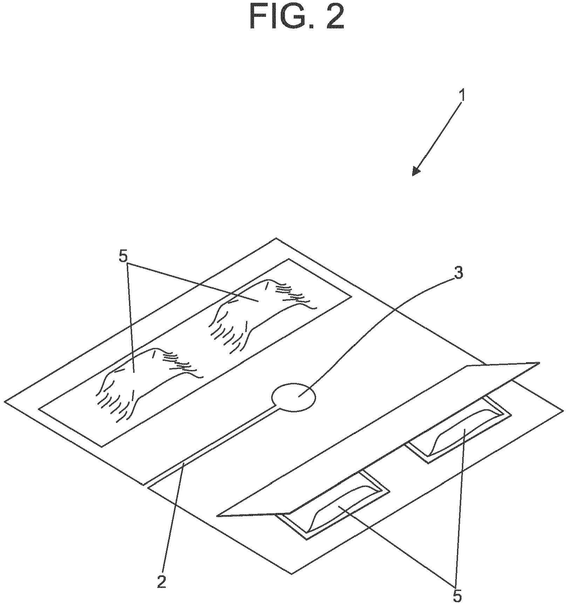

Fig. 2: Perspective view of the protective device with sachets.

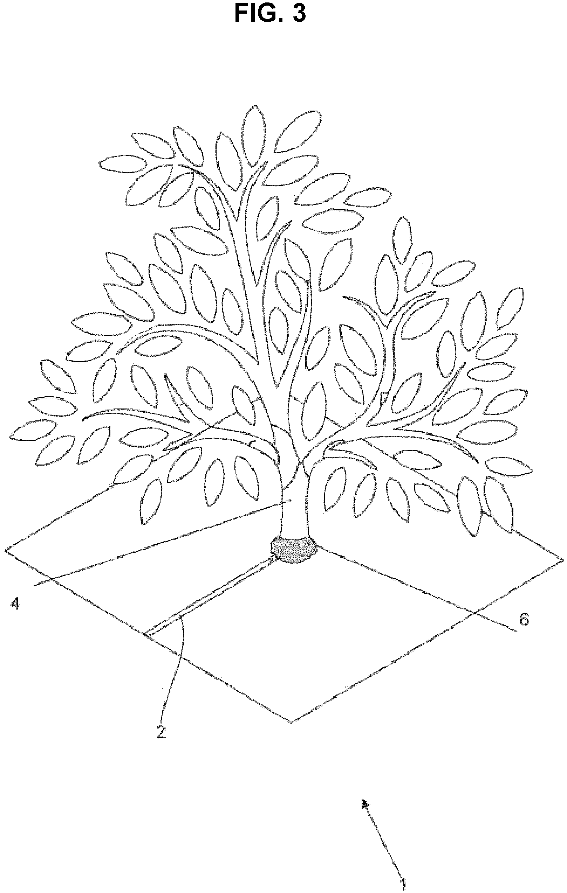

Fig. 3: View showing method for application of active substance and fluid agent to seedlings and plants.

### DETAILED DESCRIPTION OF THE INVENTION

A protective device 1 comprises a plate 2 having varied dimensions, made from known suitable materials such as cardboard, paper and biodegradable plastic, provided with a radial slot that ends in a hole 3 into which the stem 4 of the plant is fittable whereby in the perimeter of the referred plate there is coupled at least one sachet 5 in permeable substate containing at least one active substance (input) in its interior, such as fertilizers, herbicides or any other that is beneficial to the plant. Said sachets will remain in between the plate and the ground and can have any shape and dimension in accordance with the crop on which it will be used, whereby the standard configurations can be of rectangular, square, triangular shape etc., considering that in this geometry the sachets 5 have at least two faces, being one superimposed on the other. The closing of the sachets 5 will be executed by known means such as sewing, welding, pressing or thermal sealing. The sachets 5 will be fixed to the plate 2 by glueing or recovered with the material of the plate itself 2 providing that they do not come off during handling. The faces of the sachets 5 are permeable by means of micro holes, mesh material or even by close weight but porous fabric enabling the water and moisture to pass through. In this case, the water and other ground agents penetrate the sachet 5 solubilizing the inputs contained in the interior which pass, by means of chemical and physical processes to the ground in a gradual and controlled manner with consequent usefulness to the roots and plants.

The method claimed herein may provide the application of a fluid agent in gel, paste, cream state 6 or similar in the shape of a cone being placed around the hole 3 and stem of the plant of a specific insecticide carrier for control of ants of the Atta and Acromyrmex species and indirectly combat ground termites Termitidae and Rhinotermitadae.

As already mentioned, the fluid agent being fluid and sticky does not allow the access by the ants to the aerial part of the plants, thus avoiding that the leaves be cut and carried by the insects. At the same time that this protection takes place, the other insects of the colony are being contaminated by carrier agent that remains adhered to the paws, the mouthparts and to other parts of the body of the insect. The ants have the habit of trophallaxis so adding all these factors, the carrier placed by means of the methodology claimed herein will cause a real devastation in the insect colony in benefit of the plantation.

The features of the invention disclosed in the above description, in the claims and in the drawing can be essential to implementing the invention both individually and in any combination.

## Claims

1. Protective device (1) for a plant, comprising a plate (2) which is provided with a slit extending from a rim of the plate (2) to a hole (3) into which a stem (4) of the plant is fittable, wherein the plate (2) is provided with at least one sachet (5) of a material permeable for an active substance included in the sachet (5).

2. Protective device (1) according to claim 1, wherein the plate (2) has a triangular, square, rectangular, oval, or circular shape.

3. Protective device (1) according to claim 1 or 2, wherein a material of the plate (2) is selected from the group consisting of cardboard, paper and biodegradable plastic.

4. Protective device (1) according to any of the preceding claims, wherein the hole (3) is located substantially in the center of the plate (2).

5. Protective device (1) according to any of the preceding claims, wherein the active substance is at least one selected from the group consisting of a fertilizer, a herbicide or any other substance that is beneficial to the plant.

6. Protective device (1) according to any of the preceding claims, wherein the active substance is embedded within a substrate.

7. Protective device (1) according to any of the preceding claims, wherein the material of the sachet comprises microholes, mesh material or nonwoven.

8. Protective device (1) according to any of the preceding claims, wherein the plant is a seedling.

9. Protective device (1) according to any of the preceding claims, wherein a fluid agent which is in a gel, paste or cream state, is placed around the hole (3) of the plate (2) and/or the stem of the plant.

10. Method for application of an active substance to a plant utilizing the protective device (1) according to any of the claims 1-9.

11. Method according to claim 10 wherein the active substance and/or fluid agent is an insecticide for control of ants of the Atta and Acromyrmex species, Termititae and Rhinotermitadae.
